# EUROPÄISCHE PATENTSCHRIFT

(11) **EP 3 251 796 B1**
(45) Veröffentlichungstag und Bekanntmachung des Hinweises auf die Patenterteilung: **06.02.2019**
(21) Anmeldenummer: 17171117.9
(22) Anmeldetag: 15.05.2017
(51) Int. Cl.: B25B 1/08, B25B 5/08, B25B 5/16, B23Q 1/00

(54) **SPANNEINHEIT, INSBESONDERE NULLPUNKTSPANNEINHEIT**
CLAMPING UNIT IN PARTICULAR ZERO POINT CLAMPING UNIT
UNITÉ DE SERRAGE, EN PARTICULIER SYSTÈME DE SERRAGE AU POINT ZÉRO

(30) Priorität: 19.05.2016 DE 102016109195
(43) Veröffentlichungstag der Anmeldung: 06.12.2017
(73) Patentinhaber: Schunk GmbH & Co. KG Spann- und Greiftechnik, 74348 Lauffen am Neckar (DE)
(72) Erfinder: Schräder, Philip, 88512 Mengen (DE); Wäscher, Tobias, 88374 Hosskirch (DE)
(74) Vertreter: DREISS Patentanwälte PartG mbB

(56) Entgegenhaltungen:
- WO-A1-03/039807
- DE-A1-102010 013 911
- DE-A1-102014 112 843
- US-A- 4 913 481
- US-A1- 2008 048 377

## Beschreibung

Die Erfindung betrifft eine Spanneinheit gemäß dem Oberbegriff des Patentanspruchs 1, insbesondere eine Nullpunktspanneinheit, mit einem Gehäuse, mit einer im Gehäuse vorgesehenen Spannaufnahme zur Aufnahme eines Spannelements, insbesondere eines Spannbolzens, mit einem in radialer Verlagerungsrichtung zu einer Mittellängsachse hin verlagerbarem Verriegelungselement, und mit einem das Verriegelungselement betätigenden Stellglied.

Bei Spanneinheiten, wie sie beispielsweise aus der DE 10 2010 013 911 A1 vorbekannt sind, ist das Spannelement in die Spannaufnahme einführbar und die Verriegelungselemente sind in radialer Richtung in eine Verriegelungslage zum Spannen des Spannelements verlagerbar. In der radial äußeren Freigabelage kann das Spannelement aus der Aufnahme entnommen werden. Zum Verlagern der Verriegelungselemente ist ein entlang der Mittellängsachse verlagerbares Stellglied vorgesehen, welches mittels eines druckbeaufschlagbaren Kolbens verlagerbar ist.

Aus der WO 03/039807 A1 ist eine Spanneinheit mit Merkmalen des Oberbegriffs des Patentanspruchs 1 bekannt. Weitere Spanneinheiten sind beispielsweise aus der DE 10 2014 112 843 A1 oder der US 4 913 481 A bekannt.

Der Erfindung liegt die Aufgabe zugrunde, eine Spanneinheit bereitzustellen, die möglichst flach baut, besonders einfach betätigbar ist und dennoch funktionssicher arbeitet.

Diese Aufgabe wird durch eine Spanneinheit mit den Merkmalen des Anspruchs 1 gelöst. Erfindungsgemäß ist folglich vorgesehen, dass das Stellglied in einer senkrecht zur Mittellängsachse verlaufenden Bewegungsrichtung bewegbar ist, sodass das Verriegelungselement auf Grund der Bewegung des Stellglieds zwischen einer Spannlage zum Spannen des Spannelements und einer Freigabelage zum Freigeben des Spannelements verlagerbar ist. Das Spannelement kann dabei insbesondere als Spannbolzen oder als Spannring ausgebildet sein.

Dadurch, dass das Stellglied in einer senkrecht zur Mittellängsachse verlaufenden Bewegungsrichtung bewegbar ist, kann eine besonders kompakt bauende Spanneinheit bereitgestellt werden. Im Gegensatz zum Stand der Technik muss kein Bauraum zur Ermöglichung der Bewegung des Stellglieds entlang der Mittellängsachse bereitgestellt werden. Eine derartige Spanneinheit ist zudem vergleichsweise kostengünstig herstellbar.

Das Verriegelungselement ist dabei im Gehäuse zwangsgeführt und somit nur in radialer Richtung bewegbar. Das Verriegelungselement kann insbesondere als Verriegelungsschieber und/oder im Wesentlichen zylindrisch, insbesondere kreiszylindrisch, mit einer Verriegelungsnase zur Verriegelung des Spannelements ausgebildet sein.

Dabei können insbesondere zwei, drei oder mehr Verriegelungselemente vorgesehen sein, die insbesondere synchron von dem Stellglied betätigbar sein können.

Eine vorteilhafte Weiterbildung der Erfindung sieht vor, dass die Bewegungsrichtung des Stellglieds senkrecht zur Verlagerungsrichtung des Verriegelungselements verläuft. Folglich verläuft die Bewegungsrichtung vorzugsweise senkrecht zur Mittellängsachse, sowie senkrecht zur Verlagerungsrichtung. Hierdurch kann eine besonders kompakt aufgebaute Spanneinheit bereitgestellt werden.

Eine weitere vorteilhafte Ausgestaltung sieht vor, dass das Stellglied zur Bewegungskopplung mit dem Verriegelungselement einen Kopplungsnocken bzw. eine Kopplungsnut aufweist und dass das Verriegelungselement eine komplementäre Kopplungsnut bzw. einen komplementären Kopplungsnocken aufweist. Der Kopplungsnocken greift folglich in die Kopplungsnut ein, sodass das Verriegelungselement aufgrund der Stellgliedbewegung in Verlagerungsrichtung verlagert werden kann. Dadurch kann auf besonders einfache Art und Weise eine Übersetzung der Axialbewegung des Stellglieds in Bewegungsrichtung in eine radiale Verlagerung des Verriegelungselements in Verlagerungsrichtung erzielt werden.

Hierbei kann sich der Kopplungsnocken vom Stellglied bzw. dem Verriegelungselement abragend in Mittellängsachsenrichtung erstrecken. Dies trägt zu einer besonders kompakten sowie einfach aufgebauten Bauweise der Spanneinheit bei.

Vorteilhafterweise erstreckt sich die Kopplungsnut hierbei entlang einer zumindest abschnittsweise gekrümmten Nutachse. Die Nutachse kann insbesondere S-förmig ausgebildet sein. Dadurch kann auf besonders einfache und kostengünstig herstellbare Art und Weise eine Bewegungskopplung zwischen dem Stellglied und dem Verriegelungselement bereitgestellt werden.

Der Nutgrund der Kopplungsnut kann dabei insbesondere in einer senkrecht zur Mittellängsachse verlaufenden Ebene liegen, was ebenfalls zu einer kompakten Bauweise beiträgt.

Besonders bevorzugt ist dabei, wenn das Verriegelungselement in Mittellängsachsenrichtung neben dem Stellglied liegt. Insbesondere kann das Verriegelungselement über dem Stellglied angeordnet sein, wobei eine Bewegungskopplung von Verriegelungselement und Stellglied durch den in die Kopplungsnut eingreifenden Kopplungsnocken bereitgestellt wird. Die Haupterstreckung des Stellglieds ist folglich in einer Ebene, die parallel zur Ebene der Haupterstreckung des Verriegelungselements ist.

Erfindungsgemäß ist vorgesehen, dass eine Betätigungseinheit zur Verlagerung des Stellglieds vorgesehen ist, wobei das Stellglied verdrehsicher, aber in Bewegungsrichtung bewegbar mit der Betätigungseinheit verbunden ist. Die Betätigungseinheit kann dabei insbesondere manuell beispielsweise mittels eines Werkzeugs betätigbar sein. Hierdurch kann eine besonders einfache Betätigungskinematik zur Betätigung des Stellglieds bereitgestellt werden. Ein komplexer und vergleichsweise aufwendiger Aufbau einer Spanneinheit mit hydraulischen oder pneumatischen Antrieb des Stellglieds ist somit entbehrlich. Eine Betätigung der Betätigungsseinheit kann hierbei insbesondere händisch mittels eines beispielsweise Innensechskantschlüssels oder maschinell beispielsweise mittels eines Akkuschraubers erfolgen.

Erfindungsgemäß ist ferner vorgesehen, dass die Betätigungseinheit verdrehbar aber axialsicher am Gehäuse angeordnet ist. Eine Drehbewegung der Betätigungseinheit wird folglich in eine axiale Bewegung des Stellglieds in Bewegungsrichtung umgewandelt. Hierbei kann die Betätigungseinheit insbesondere einen Gewindeabschnitt umfassen, der zur Bewegungskopplung der Betätigungseinheit mit dem Stellglied mit einem stellgliedseitigen Gewindeabschnitt zusammenwirkt. Insbesondere kann die Betätigungseinheit einen Schaftabschnitt mit einem Außengewinde umfassen, der in ein stellgliedseitiges Innengewinde zur Bewegungskopplung eingreift. Insbesondere kann die Betätigungseinheit als Schraube mit einem Schraubenkopf ausgebildet sein. Der Schraubenkopf kann hierbei insbesondere einen Innensechskant aufweisen.

Alternativ kann das Stellglied auch einen Zahnstangenabschnitt aufweisen, wobei die Betätigungseinheit ein Ritzel zur Verlagerung des Stellglieds umfassen kann.

Eine besonders bevorzugte Weiterbildung der Erfindung ergibt sich daraus, dass die Betätigungseinheit und das Stellglied zumindest im Wesentlichen in derselben, senkrecht zur Mittellängsachse verlaufenden Ebene liegen. Hierdurch kann eine besonders kompakte Bauweise der Spanneinheit bereitgestellt werden.

Vorteilhafterweise ist die Haupterstreckung der Betätigungseinheit dabei in Bewegungsrichtung des Stellglieds. Die Verlagerung des Stellglieds erfolgt folglich entlang der Betätigungseinheit.

Besonders bevorzugt ist zudem, wenn zwischen dem Verriegelungselement und dem Stellglied eine geheäuseseitige Trennwand vorgesehen ist, wobei der Kopplungsnocken durch einen Durchbruch in der Trennwand hindurch in die Kopplungsnut eingreift. Die Trennwand kann hierbei insbesondere auch als Führung für das Stellglied wirken. Dabei kann insbesondere zudem ein Gehäuseboden vorgesehen sein, sodass die Trennwand einerseits und der Gehäuseboden andererseits eine Führung für das Stellglied ausbilden.

Eine besonders kompakte Bauweise ergibt sich dann, wenn das Stellglied als ebener, flacher Körper ausgebildet ist. Insbesondere kann das Stellglied hierbei ringförmig ausgebildet sein.

Dabei kann die Trennwand eine Erhebung aufweisen, um die das Stellglied verläuft. Die Erhebung kann als zusätzliches Führungsmittel für das Stellglied wirken. In diesem Zusammenhang ist zudem denkbar, dass sich die Betätigungseinheit durch einen ersten Stellgliedabschnitt sowie die Erhebung hindurch erstreckt und in einen zweiten Stellgliedabschnitt mündet. Die Erhebung kann folglich als Führung für die Betätigungseinheit wirken.

Besonders bevorzugt ist schließlich, wenn das Gehäuse zur Bewegungsführung des Stellglieds einen Führungsnocken bzw. eine Führungsnut aufweist, wobei das Stellglied eine komplementäre Führungsnut bzw. einen Führungsnocken aufweist. Dadurch kann auf einfache Art und Weise eine Bewegungsführung des Stellglieds in Bewegungsrichtung bereitgestellt werden.

Weitere Einzelheiten und vorteilhafte Ausgestaltungen der Erfindung sind der folgenden Beschreibung zu entnehmen, anhand derer die in den Figuren dargestellte Ausführungsform der Erfindung näher beschrieben und erläutert ist. Es zeigen:
- Figur 1: Perspektivische Darstellung einer erfindungsgemäßen Spanneinheit;
- Figur 2: (a) Perspektivische Darstellung der Spanneinheit gemäß Figur 1 in der Freigabelage; (b) Längsschnitt entlang der Linie B-B gemäß Fig. 2c; (c) Querschnitt entlang der Linie C'-C' bzw. abschnittsweise C"-C" gemäß Fig. 2b;
- Figur 3: (a) Perspektivische Darstellung der Spanneinheit gemäß Figur 1 in der Spannlage mit einem in der Spannaufnahme angeordneten Spannelement; (b) Längsschnitt durch die Darstellung entlang der Linie B-B gemäß Fig. 3c; (c) Querschnitt entlang der Linie C'-C' bzw. abschnittsweise C"-C" gemäß Fig. 3b;
- Figur 4: (a) u. (b) Zwei perspektivische Darstellungen der Verriegelungselemente der Spanneinheit gemäß Figur 1; (c) Perspektivische Darstellung des Stellglieds der Spanneinheit gemäß Figur 1; (d) Perspektivische Darstellung des Gehäuses der Spanneinheit gemäß Figur 1;
- Figur 5: Perspektivische Darstellung des Stellglieds mit daran angeordneten Verriegelungselementen der Spanneinheit gemäß Figur 1.

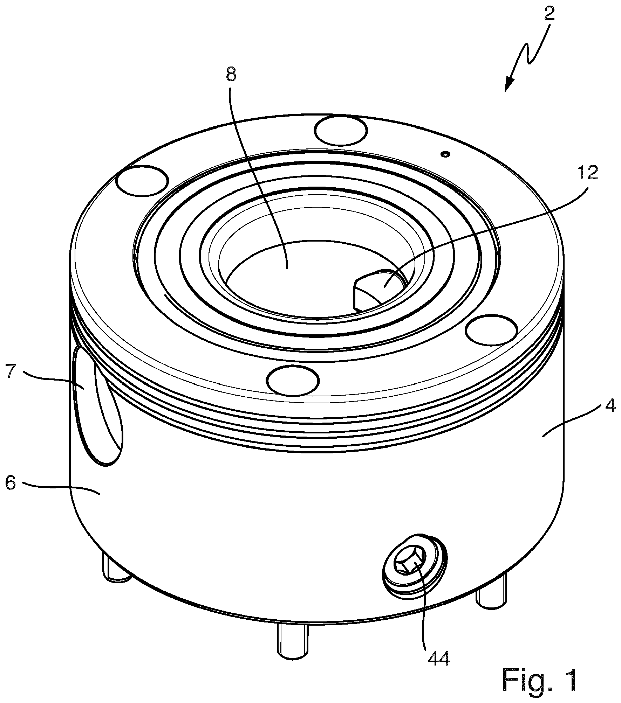

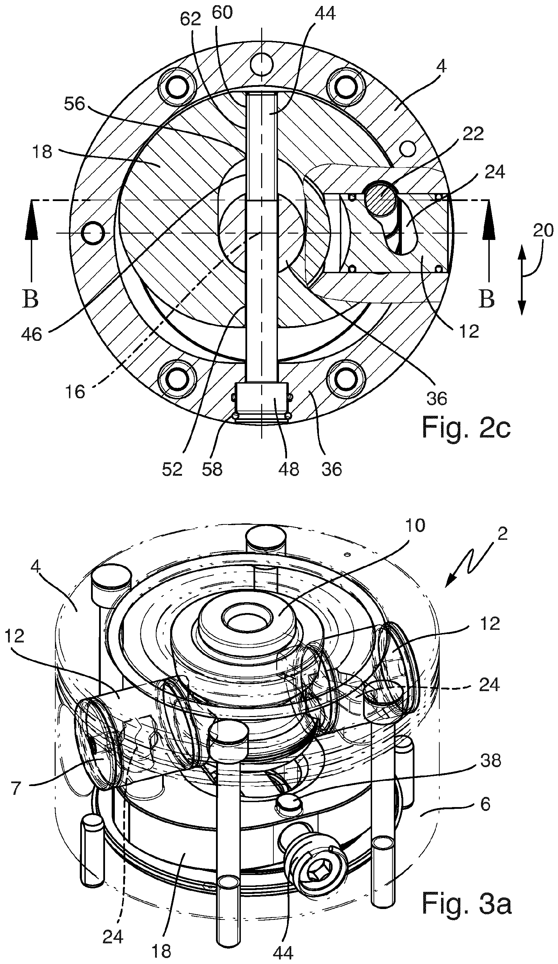

Figur 1 zeigt eine Spanneinheit 2 in Form einer Nullpunktspanneinheit. Die Spanneinheit 2 umfasst ein Gehäuse 4 mit einem Gehäusegrundkörper 6. Das Gehäuse 4 bzw. der Gehäusegrundkörper 6 weist eine zentrale Spannaufnahme 8 zur Aufnahme eines als Spannbolzen ausgebildeten Spannelements 10, wie in Figur 3a gezeigt, auf. Das Spannelement 10 kann insbesondere in einen Werkstückträger oder eine Palette integriert sein, welche mittels der Spanneinheit 2 an einer vorgegebenen Position fixiert werden kann.

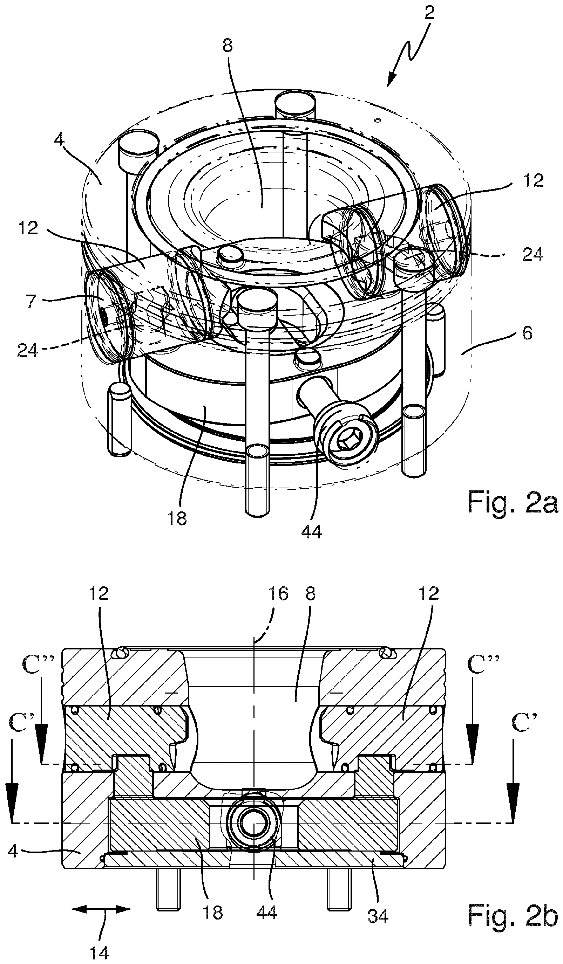

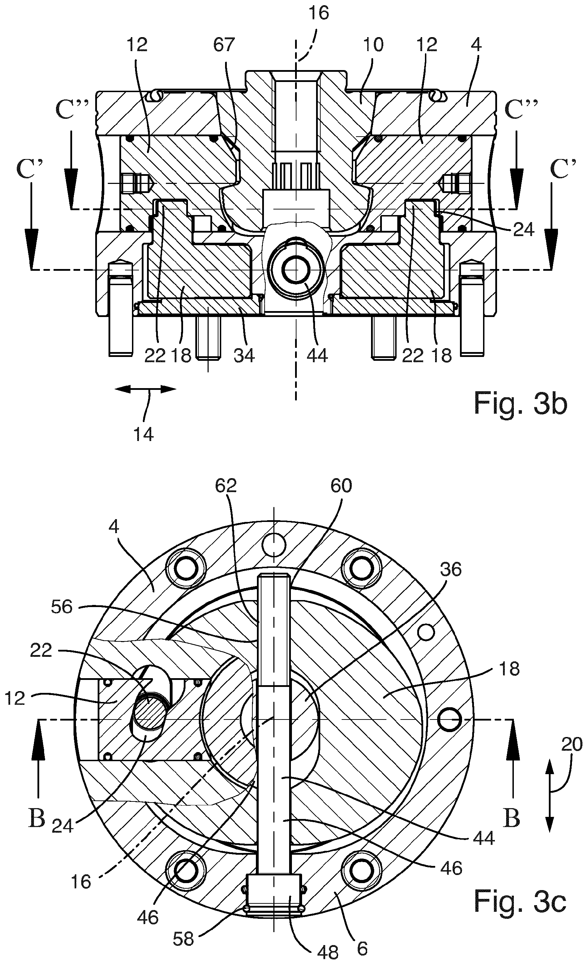

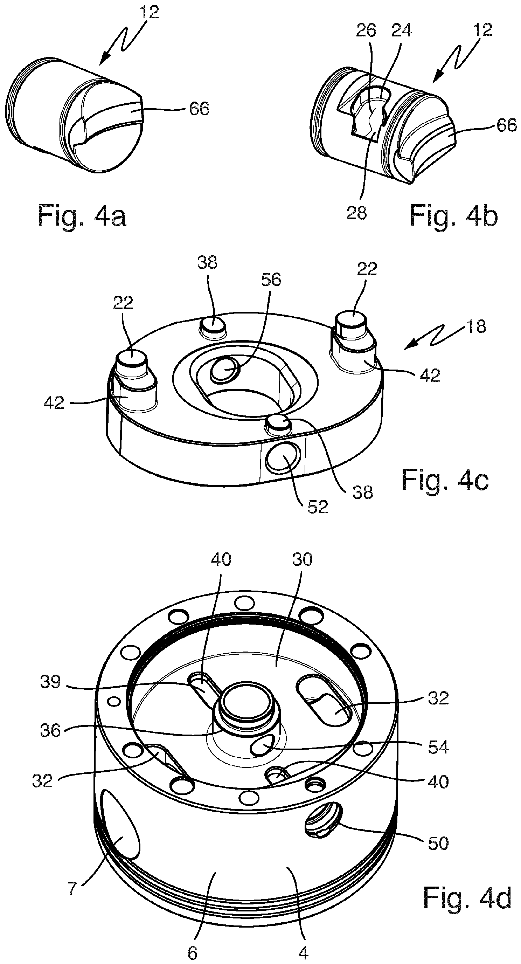

Wie in den Figuren 2 und 3 gezeigt ist, weist die Spanneinheit 2 zur sicheren Fixierung des Spannelements 10 in der Spannaufnahme 8 zwei als Spannschieber ausgebildete, im Wesentlichen kreiszylindrische Verriegelungselemente 12 auf, die in den Figuren 4a und 4b als Einzelteile dargestellt sind. Die Verriegelungselemente 12 sind hierbei in radialer Verlagerungsrichtung 14 hin zur Mittellängsachse 16 der Spanneinheit 2 verlagerbar. Die Verriegelungselemente 12 sind einander gegenüberliegend angeordnet und sind folglich aufeinander zu bzw. voneinander weg bewegbar.

In der radial äußeren Position, die in Figur 2 gezeigt ist, nehmen die Verriegelungselemente 12 eine Freigabelage ein, in der das Spannelement 10 in die Spannaufnahme 8 einführbar bzw. von dieser entnehmbar ist. Demgegenüber nehmen die Verriegelungselemente 12, wie in Figur 3 gezeigt, in der radial inneren Position eine Spannlage ein, in der das Spannelement 10 an die Spanneinheit 2 gespannt ist. Die Verriegelungselemente 12 sind folglich zwischen einer Spannlage und einer Freigabelage verlagerbar. Zur Zwangsführung der Verriegelungselemente 12 in radialer Richtung, weist der Gehäusegrundkörper 6 in radialer Richtung verlaufende Führungsausnehmungen 7 für die Verriegelungselemente 12 auf.

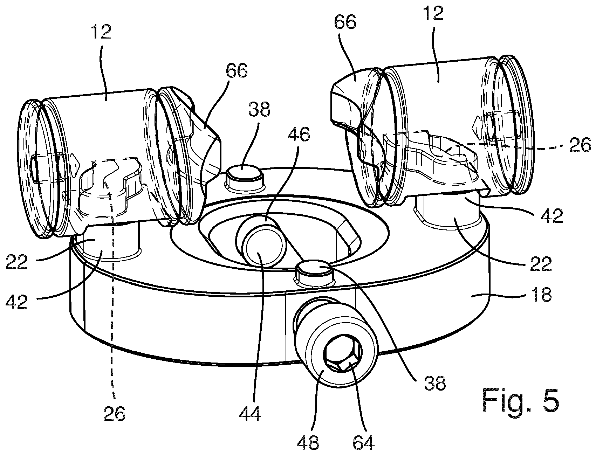

Zur Verlagerung der Verriegelungselemente 12 ist ein flaches, ringförmiges Stellglied 18 mit ovaler Außenkontur vorgesehen, welches in Figur 4c als Einzelteil dargestellt ist. Das Stellglied 18 ist dabei senkrecht zur Verlagerungsrichtung 14 sowie senkrecht zur Mittellängsachse 16 in einer Bewegungsrichtung 20 verlagerbar. Zur Bewegungskopplung des Stellglieds 18 mit den Verriegelungselementen 12, weist das Stellglied 18 zwei einander gegenüberliegende Kopplungsnocken 22 auf, die sich in Mittellängsachsenrichtung 16 erstrecken und vom Stellglied 18 abragen. Die Kopplungsnocken 22 greifen dabei, wie in Figur 5 besonders deutlich zu erkennen ist, in verriegelungselementseitige Kopplungsnuten 24 ein. Die Kopplungsnuten 24 der Verriegelungselemente 12 erstrecken sich hierbei entlang einer S-förmigen, abschnittsweise gekrümmten Nutachse 26, die in den Figuren 4b und 5 zu erkennen ist. Der Nutgrund 28 der Kopplungsnuten 24 liegt in einer senkrecht zur Mittellängsachse 16 verlaufenden Ebene. Wird das Stellglied 18 folglich in Bewegungsrichtung 20 bewegt, so wird diese axiale Bewegung in eine radiale Verlagerung der Verriegelungselemente 12 in Verlagerungsrichtung 14 aufgrund der gekrümmten Ausbildung der Kopplungsnuten 24 umgewandelt.

Das Stellglied 18 ist auf der der Spannaufnahme 8 abgewandten Seite des Grundgehäuses 6 an einer grundgehäuseseitigen Trennwand 30, die in Figur 4d gezeigt ist, verlagerbar gelagert. Diese trennt folglich das Stellglied 18 räumlich von den Verriegelungselementen 12, wobei in der Trennwand 30 Durchbrüche 32 vorgesehen sind, durch die die Kopplungsnocken 22 in die Kopplungsnuten 24 eingreifen. In Mittellängsachsenrichtung 16 liegen die Verriegelungselemente 12 folglich neben dem Stellglied 18, räumlich getrennt durch die Trennwand 30. Ist das Stellglied 18 von der Unterseite her an der Trennwand 30 angeordnet, so wird am Grundgehäuse 6 ein Gehäuseboden 34 angeordnet, der in den Figuren 2b und 3b zu erkennen ist. Der Gehäuseboden 34 sowie die Trennwand 30 wirken folglich als Führung für das Stellglied 18. Dabei weist die Trennwand 30 weiterhin eine Erhebung 36 (vgl. Figur 4d) auf, um die das Stellglied 18 verläuft, sodass die Erhebung 36 ebenfalls zur Führung des Stellglieds 18 beiträgt. Außerdem weist das Stellglied 18 zwei einander gegenüberliegende Führungsnocken 38 auf, die in einem Winkel von 90° zu den Kopplungsnocken 22 angeordnet sind und ebenfalls vom Stellglied 18 abragen. Die Führungsnocken 38 greifen in trennwandseitige Führungsnuten 40 (vgl. Fig. 4d) ein, deren Nutachsen 39 sich in Bewegungsrichtung 20 des Stellglieds 18 erstrecken. Hierdurch ergibt sich eine vorteilhafte Zwangsführung des Stellglieds 18. Des Weiteren weisen die Kopplungsnocken 22 Führungsabschnitte 42 auf, die in Figur 4c deutlich zu erkennen sind, die mit den trennwandseitigen Durchbrüchen 32 ebenfalls zur Unterstützung der Zwangsführung des Stellglieds 18 in Bewegungsrichtung 20 zusammenwirken.

Wie in den Figuren 2c und 3c besonders deutlich zu erkennen ist, ist zur Verlagerung des Stellglieds 18 eine schraubenförmige Betätigungseinheit 44 mit einem Kopfabschnitt 48 und einem Schaftabschnitt 46 vorgesehen. Zur Aufnahme der Betätigungseinheit 44 weist das Grundgehäuse 6 eine Ausnehmung 50 (vgl. Fig. 4d) auf.

Der Schaftabschnitt 48 erstreckt sich dabei in Bewegungsrichtung 20 des Stellglieds 18 durch einen als Durchbruch ausgebildeten ersten Stellgliedabschnitt 52 sowie einen Durchbruch 54 in der trennwandseitigen Erhebung 36 hindurch und mündet in einem ebenfalls als Durchbruch ausgebildeten zweiten Stellgliedabschnitt 56 (vgl. Fig. 4c). Die Betätigungseinheit 44 ist hierbei verlagerbar aber axialsicher am Grundgehäuse 6 mittels eines Sicherungsrings 58 befestigt. Demgegenüber ist das Stellglied 18 verdrehsicher, aber in Bewegungsrichtung 20 bewegbar mit der Betätigungseinheit 44 verbunden. Hierzu weist die Betätigungseinheit 44 einen Gewindeabschnitt 60 auf, der mit einem dazu komplementären stellgliedseitigen Gewindeabschnitt 62 im zweiten Stellgliedabschnitt 56 zusammenwirkt.

Zum Verdrehen der Betätigungseinheit 44 weist der Kopfabschnitt 48 einen Innensechskant 64 auf, der in Figur 5 besonders deutlich zu erkennen ist.

Die Funktionsweise der Spanneinheit 2 ist sodann wie folgt: Ausgehend von der in Figur 2 gezeigten Freigabelage, wird zunächst ein Spannelement 10 in die Spannaufnahme 8 eingeführt.

Sodann wird die Betätigungseinheit 44 händisch mittels eines Innensechskantschlüssels oder maschinell, beispielsweise mittels eines Akkuschraubers, der ein Innensechskantwerkzeug aufweist, verdreht. Dies bewirkt eine Verlagerung des Stellglieds 18 in Bewegungsrichtung 20 hin zum Kopfabschnitt 48, was in den Figuren 2c und 3c besonders deutlich zu erkennen ist. Mit der Bewegung des Stellglieds 18 geht auch eine synchrone Verlagerung der beiden Verriegelungselemente 12 in radialer Verriegelungsrichtung 14 einher. Dabei greifen die Verriegelungsnasen 66 (vgl. Fig. 4a, b und Fig. 5) in eine konusartige Ausnehmung 67 im Spannelement 10 ein, was in Figur 3b deutlich zu erkennen ist, sodass das Spannelement 10 entlang der Mittellängsachse 16 nach unten in die Spannaufnahme 8 eingezogen wird und somit an die Spanneinheit 2 gespannt wird.

Insgesamt wird eine Spanneinheit 2 bereitgestellt, die besonders kompakt aufgebaut ist und die besonders kostengünstig herstellbar ist. Hierzu liegen die Betätigungseinheit 44 und das Stellglied 18 in einer gemeinsamen Ebene und die Verriegelungselemente 12 in einer dazu parallelen Ebene darüber, wobei das Stellglied 18 senkrecht zur Mittellängsachse 16 verlagerber ist.

Ferner wird eine besonders einfach aufgebaute, sowie einfach betätigbare Kinematik zur Verriegelung des Spannelements 10 an der Spanneinheit 2 bereitgestellt. Hierzu ist die Betätigungseinheit 44 manuell, insbesondere händisch, betätigbar. Druckmedien wie beispielsweise Druckluft oder Hydrauliköl sind vollständig entbehrlich, sodass eine einfach aufgebaute Spanneinheit 2 bereitgestellt werden kann.

## Patentansprüche

1. Spanneinheit (2), insbesondere Nullpunktspanneinheit, mit einem Gehäuse(4), mit einer im Gehäuse (4) vorgesehenen Spannaufnahme (8) zur Aufnahme eines Spannelements (10), mit einem in radialer Verlagerungsrichtung zu einer Mittellängsachse (16) hin verlagerbarem Verriegelungselement (12), und mit einem das Verriegelungselement (12) betätigenden Stellglied (18), wobei das Stellglied (18) in einer senkrecht zur Mittellängsachse (16) verlaufenden Bewegungsrichtung (20) bewegbar ist, sodass das Verriegelungselement (12) auf Grund der Bewegung des Stellglieds (18) zwischen einer Spannlage zum Spannen des Spannelements (10) und einer Freigabelage zum Freigeben des Spannelements (10) verlagerbar ist, **dadurch gekennzeichnet, dass** eine Betätigungseinheit (44) zur Verlagerung des Stellglieds (18) vorgesehen ist, wobei die Betätigungseinheit (44) verdrehbar, aber axialsicher am Gehäuse (4) angeordnet ist und wobei das Stellglied (18) verdrehsicher am Gehäuse (4) aber in Bewegungsrichtung (20) bewegbar mit der Betätigungseinheit (44) verbunden ist.

2. Spanneinheit (2) nach Anspruch 1, **dadurch gekennzeichnet, dass** die Bewegungsrichtung (20) des Stellglieds (18) senkrecht zur Verlagerungsrichtung (14) des Verriegelungselements (12) verläuft.

3. Spanneinheit (2) nach einem der vorhergehenden Ansprüche, **dadurch gekennzeichnet, dass** das Stellglied (18) zur Bewegungskopplung mit dem Verriegelungselement (12) einen Kopplungsnocken (22) bzw. eine Kopplungsnut (24) aufweist, und dass das Verriegelungselement (12) eine komplementäre Kopplungsnut (24) bzw. einen komplementären Kopplungsnocken (22) aufweist, wobei sich der Kopplungsnocken (22) vom Stellglied (18) bzw. dem Verriegelungselement (12) abragend in Mittellängsachsenrichtung erstreckt.

4. Spanneinheit (2) nach Anspruch 3, **dadurch gekennzeichnet, dass** sich die Kopplungsnut (24) entlang einer zumindest abschnittsweise gekrümmten Nutachse (26) erstreckt, wobei der Nutgrund (28) der Kopplungsnut (24) in einer senkrecht zur Mittellängsachse (16) verlaufenden Ebene liegt.

5. Spanneinheit (2) nach einem der vorhergehenden Ansprüche, **dadurch gekennzeichnet, dass** das Verriegelungselement (12) in Mittellängsachsenrichtung neben dem Stellglied (18) liegt.

6. Spanneinheit (2) nach Anspruch 1, **dadurch gekennzeichnet, dass** die Betätigungseinheit (44) einen Gewindeabschnitt (60) umfasst, der zur Bewegungskopplung der Betätigungseinheit (44) mit dem Stellglied (18) mit einem stellgliedseitigen Gewindeabschnitt (62) zusammenwirkt.

7. Spanneinheit (2) nach einem der Ansprüche 4 bis 6, **dadurch gekennzeichnet, dass** die Betätigungseinheit (44) manuell betätigbar ist.

8. Spanneinheit (2) nach einem der Ansprüche 4 bis 7, **dadurch gekennzeichnet, dass** die Betätigungseinheit (44) und das Stellglied (18) zumindest im Wesentlichen in derselben, senkrecht zur Mittellängsachse (16) verlaufenden Ebene liegen.

9. Spanneinheit (2) nach einem der Ansprüche 4 bis 8, **dadurch gekennzeichnet, dass** die Haupterstreckung der Betätigungseinheit (44) in Bewegungsrichtung (20) des Stellglieds (18) ist.

10. Spanneinheit (2) nach einem der vorhergehenden Ansprüche, **dadurch gekennzeichnet, dass** zwischen dem Verriegelungselement (12) und dem Stellglied (18) eine gehäuseseitige Trennwand (30) vorgesehen ist, wobei der Kopplungsnocken (22) durch einen Durchbruch in der Trennwand (30) hindurch in die Kopplungsnut (24) eingreift.

11. Spanneinheit (2) nach einem der vorhergehenden Ansprüche, **dadurch gekennzeichnet, dass** das Stellglied (18) ringförmig ausgebildet ist.

12. Spanneinheit (2) nach den Ansprüchen 10 und 11, **dadurch gekennzeichnet, dass** die Trennwand (30) eine Erhebung (36) aufweist, um die das Stellglied (18) verläuft, wobei sich die Betätigungseinheit (44) durch einen ersten Stellgliedabschnitt (52) sowie die Erhebung (36) hindurch erstreckt und in einen zweiten Stellgliedabschnitt (56) mündet.

13. Spanneinheit (2) nach einem der vorhergehenden Ansprüche, **dadurch gekennzeichnet, dass** das Gehäuse (4) zur Bewegungsführung des Stellglieds (18) einen Führungsnocken (38) bzw. eine Führungsnut (40) aufweist, und dass das Stellglied (18) eine komplementäre Führungsnut (40) bzw. einen Führungsnocken (38) aufweist.

## Claims

1. Clamping unit (2), in particular a zero point clamping unit, comprising a housing (4), a clamp recess (8) provided in the housing (4) for receiving a clamp element (10), a locking element (12) which can be displaced in a radial displacement direction with respect to a central longitudinal axis (16), and an actuator (18) that actuates the locking element (12), it being possible for the actuator (18) to move in a movement direction (20) that extends perpendicular to the central longitudinal axis (16) such that the locking element (12) can be displaced between a clamping position for clamping the clamp element (10) and a release position for releasing the clamp element (10) on account of the movement of the actuator (18), **characterized in that** an actuation unit (44) is provided for displacing the actuator (18), the actuation unit (44) being rotatable but arranged so as to be axially secure on the housing (4) and the actuator (18) being connected to the actuation unit (44) so as to be secured against rotation on the housing (4) but movable in the movement direction (20) .

2. Clamping unit (2) according to claim 1, **characterized in that** the movement direction (20) of the actuator (18) extends perpendicular to the displacement direction (14) of the locking element (12).

3. Clamping unit (2) according to any of the preceding claims, **characterized in that** the actuator (18) has a coupling cam (22) or a coupling groove (24) for movement coupling to the locking element (12), and **in that** the locking element (12) has a complementary coupling groove (24) or a complementary coupling cam (22), the coupling cam (22) extending in the direction of the central longitudinal axis so as to project from the actuator (18) or the locking element (12).

4. Clamping unit (2) according to claim 3, **characterized in that** the coupling groove (24) extends along a groove axis (26) that is curved at least in portions, the groove base (28) of the coupling groove (24) being situated in a plane that extends perpendicular to the central longitudinal axis (16).

5. Clamping unit (2) according to any of the preceding claims, **characterized in that** the locking element (12) is situated next to the actuator (18) in the direction of the central longitudinal axis.

6. Clamping unit (2) according to claim 1, **characterized in that** the actuation unit (44) comprises a threaded portion (60) which interacts with an actuator-side threaded portion (62) in order to couple the movement of the actuation unit (44) to the actuator (18).

7. Clamping unit (2) according to any of claims 4 to 6, **characterized in that** the actuation unit (44) can be actuated manually.

8. Clamping unit (2) according to any of claims 4 to 7, **characterized in that** the actuation unit (44) and the actuator (18) are situated, at least substantially, in the same plane extending perpendicular to the central longitudinal axis (16).

9. Clamping unit (2) according to any of claims 4 to 8, **characterized in that** the main extension of the actuation unit (44) is in the movement direction (20) of the actuator (18).

10. Clamping unit (2) according to any of the preceding claims, **characterized in that** a housing-side partition (30) is provided between the locking element (12) and the actuator (18), the coupling cam (22) engaging in the coupling groove (24) through an opening in the partition (30).

11. Clamping unit (2) according to any of the preceding claims, **characterized in that** the actuator (18) is annular.

12. Clamping unit (2) according to claims 10 and claim 11, **characterized in that** the partition (30) has a protuberance (36) around which the actuator (18) extends, the actuation unit (44) extending through a first actuator portion (52) and the protuberance (36) and leading into a second actuator portion (56).

13. Clamping unit (2) according to any of the preceding claims, **characterized in that** the housing (4) has a guide cam (38) or a guide groove (40) for guiding the movement of the actuator (18), and **in that** the actuator (18) has a complementary guide groove (40) or a guide cam (38).

## Revendications

1. Unité de serrage (2), en particulier unité de serrage au point zéro, pourvue d'un boîtier (4), d'un logement de serrage (4) prévu dans le boîtier (4) et destiné à loger un élément de serrage (10), d'un élément de verrouillage (12) déplaçable dans un sens de déplacement radial en direction d'un axe longitudinal médian (16), et d'un actionneur (18) actionnant l'élément de verrouillage (12), dans lequel l'actionneur (18) peut être déplacé dans un sens de mouvement (20) s'étendant perpendiculairement à l'axe longitudinal médian (16), de sorte que l'élément de verrouillage (12), sous l'effet du mouvement de l'actionneur (18), est déplaçable entre une position de serrage permettant le serrage de l'élément de serrage (10) et une position de libération permettant la libération de l'élément de serrage (10), **caractérisée en ce qu'**une unité d'actionnement (44) est prévue pour le déplacement de l'actionneur (18), dans lequel l'unité d'actionnement (44) est agencée sur le boîtier (4) en rotation mais avec blocage axial, et dans lequel l'actionneur (18) est relié à l'unité d'actionnement (44) de manière bloquée en rotation sur le boîtier (4) mais mobile dans le sens de mouvement (20).

2. Unité de serrage (2) selon la revendication 1, **caractérisée en ce que** le sens de mouvement (20) de l'actionneur (18) s'étend perpendiculairement au sens de déplacement (14) de l'élément de verrouillage (12).

3. Unité de serrage (2) selon l'une quelconque des revendications précédentes, **caractérisée en ce que** l'actionneur (18) présente, pour l'accouplement cinétique à l'élément de verrouillage (12), une came d'accouplement (22) ou une rainure d'accouplement (24), et **en ce que** l'élément de verrouillage (12) présente une rainure d'accouplement (24) complémentaire ou une came d'accouplement (22) complémentaire, dans lequel la came d'accouplement (22) s'étend dans la direction de l'axe longitudinal médian en faisant saillie de l'actionneur (18) ou de l'élément de verrouillage (12).

4. Unité de serrage (2) selon la revendication 3, **caractérisée en ce que** la rainure d'accouplement (24) s'étend le long d'un axe de rainure (26) au moins en partie courbé, dans lequel la base de rainure (28) de la rainure d'accouplement (24) se situe dans un plan s'étendant perpendiculairement à l'axe longitudinal médian (16).

5. Unité de serrage (2) selon l'une quelconque des revendications précédentes, **caractérisée en ce que** l'élément de verrouillage (12) se situe à côté de l'actionneur (18) dans la direction de l'axe longitudinal médian (16).

6. Unité de serrage (2) selon la revendication 1, **caractérisée en ce que** l'unité d'actionnement (44) comporte une partie filetée (60), qui coopère avec une partie filetée (62) côté actionneur pour l'accouplement cinétique de l'unité d'actionnement (44) avec l'actionneur (18).

7. Unité de serrage (2) selon l'une quelconque des revendications 4 à 6, **caractérisée en ce que** l'unité d'actionnement (44) peut être actionnée manuellement.

8. Unité de serrage (2) selon l'une quelconque des revendications 4 à 7, **caractérisée en ce que** l'unité d'actionnement (44) et l'actionneur (18) se situent au moins sensiblement dans le même plan s'étendant perpendiculairement à l'axe longitudinal médian (16).

9. Unité de serrage (2) selon l'une quelconque des revendications 4 à 8, **caractérisée en ce que** l'étendue principale de l'unité d'actionnement (44) se situe dans le sens de mouvement (20) de l'actionneur (18).

10. Unité de serrage (2) selon l'une quelconque des revendications précédentes, **caractérisée en ce qu'**une cloison (20) côté boîtier est prévue entre l'élément de verrouillage (12) et l'actionneur (18), dans lequel la came d'accouplement (22) s'insère dans la rainure d'accouplement (24) par une ouverture dans la cloison (30) .

11. Unité de serrage (2) selon l'une quelconque des revendications précédentes, **caractérisée en ce que** l'actionneur (18) est annulaire.

12. Unité de serrage (2) selon les revendications 10 et 11, **caractérisée en ce que** la cloison (30) présente une partie surélevée (36) le long de laquelle s'étend l'actionneur (18), dans lequel l'unité d'actionnement (44) s'étend à travers une première partie d'actionneur (52) ainsi que la partie surélevée (36) et débouche dans une deuxième partie d'actionneur (56).

13. Unité de serrage (2) selon l'une quelconque des revendications précédentes, **caractérisée en ce que** le boîtier (4) présente, pour le guidage du mouvement de l'actionneur (18), une came de guidage (38) ou une rainure de guidage (40), et **en ce que** l'actionneur (18) présente une rainure de guidage (40) complémentaire ou une came de guidage (38).
